(19) Europäisches Patentamt / European Patent Office / Office européen des brevets

(11) **EP 1 473 706 B1**

(12) **EUROPEAN PATENT SPECIFICATION**

(45) Date of publication and mention
of the grant of the patent:
**27.01.2010 Bulletin 2010/04**

(21) Application number: **02775321.9**

(22) Date of filing: **10.10.2002**

(51) Int Cl.:
*B32B 5/26* (2006.01)     *B32B 7/02* (2006.01)
*B32B 7/14* (2006.01)     *B60N 3/04* (2006.01)
*D06N 7/00* (2006.01)

(86) International application number:
**PCT/JP2002/010540**

(87) International publication number:
**WO 2003/060875 (24.07.2003 Gazette 2003/30)**

(54) **FLOOR LAYING MATERIAL, PIECE MAT, AND ARRANGING STRUCTURE THEREOF**

BODENBEDECKUNGSMATERIAL, STÜCKMATTE UND ANORDNUNGSSTRUKTUR DAFÜR

MATERIEL DE REVETEMENT DE SOL, MOQUETTE EN COUPON, ET STRUCTURE D'INSTALLATION DU MATERIEL

(84) Designated Contracting States:
**AT BE BG CH CY CZ DE DK EE ES FI FR GB GR IE IT LI LU MC NL PT SE SK TR**

(30) Priority: **10.01.2002 JP 2002003327**

(43) Date of publication of application:
**03.11.2004 Bulletin 2004/45**

(73) Proprietor: **Hayashi Engineering Inc.**
**Nagoya-shi,**
**Aichi 460-0013 (JP)**

(72) Inventors:
• **IMAMURA, Masahito,**
**c/o Hayashi Engineering Inc.**
**Nagoya-shi,**
**Aichi 460-0013 (JP)**

• **NAKAMURA, Toshiyuki,**
**c/o Hayashi Engineering Inc.**
**Nagoya-shi,**
**Aichi 460-0013 (JP)**

(74) Representative: **Garratt, Peter Douglas et al**
**Mathys & Squire LLP**
**120 Holborn**
**London**
**EC1N 2SQ (GB)**

(56) References cited:
WO-A-00/53456     WO-A-99/44817
JP-A- 6 001 176    JP-A- 51 050 701
JP-A- 61 070 085   JP-A- 2001 047 926
JP-A- 2001 047 926 JP-A- 2002 264 736
US-A- 5 459 291    US-A- 5 554 830
US-A- 6 145 617

**Description**

TECHNICAL FIELD

The present invention relates to a floor laying material which is laid on a floor panel of a cabin in a vehicle for reducing noise within the cabin of the vehicle, a piece mat which is arranged on the floor laying material, and an arranging structure thereof.

BACKGROUND ART

Conventionally, for reducing noise in spaces of an automobile such as a passenger's cabin, a baggage room, an engine room and the like, it has been known that an important element is the control of a flow resistance value (permeability) of a laying material laid in the spaces of the automobile, specifically, a carpet and a dash silencer as interior materials, and another trim material.

Prior arts related to the control of such a flow resistance value are disclosed in JP-51-112889-A, JP-56-142054-A, JP-59-186750-A and the like. These prior arts are all intended to enhance the sound absorbing property of a silencer by setting the permeability of the silencer within predetermined range.

In regard to this type of prior art, Published Japanese Translation of PCT International Publication for Patent Application No.2000-516175 (PCT/CH97/00412) makes the most detailed investigations on the flow resistance value of laying materials.

This Published Japanese Translation of PCT International Publication for Patent Application No.2000-516175 discloses "a multi-functional kit for noise reduction which comprises at least one areal vehicle part, and a noise reduction assembly package made up of a plurality of layers", the noise reduction assembly package including a "microporous stiffening layer."This stiffening layer is designed to have a total flow resistance value of $R_t = 500$ $Nsm^{-3}$ to $R_t = 2500$ $Nsm^{-3}$, in particular, a total flow resistance value from $R_t = 900$ $Nsm{-3}$ to $R_t = 2000$ $Nsm^{-3}$. The flow resistance value of this stiffening layer is much lower than the flow resistance value which has been conventionally disclosed. The prior art technique disclosed in the national phase publication is intended to achieve a high sound absorbing property in a region ranging from an intermediate frequency region to a high frequency region by defining the flow resistance value of the stiffening layer in this manner.

It should be noted that the prior art disclosed in Published Japanese Translation of PCT International Publication for Patent Application No.2000-516175, which is intended to control the flow resistance value of the assembly to prevail silence within an automobile cabin, does not take into consideration modifications made by a user who has purchased an automobile, which may disturb the balance of the flow resistance value of the assembly. For example, if the assembly includes a floor laying material which largely affects sound absorption within the cabin, an optional antifouling piece mat laid by a user on the floor laying material below his feet would cause a change in the balance of flow resistance value, thereby failing to exhibit the sound absorbing property intended by the original design. Particularly, with a floor laying material designed to rely on the flow resistance value for the sound absorbing property, there is a risk that the noise level may become higher than that of the original design when the balance is lost.

Therefore, a piece mat or the like should not be laid on the prior art assembly (floor laying material). In general, automobile manufacturers sell automobiles without setting an option for a piece mat. But many users who do not have expert knowledge on acoustic designing may purchase by themselves commercially available piece mats for laying on the assembly (floor laying material). This leads to a change in the flow resistance value of the assembly (floor laying material), thus failing to provide a quietness, as originally designed, within the automobile cabin.

It may be possible to dissuade the user from laying a piece mat on the assembly (floor laying material) by educating the user through an instruction manual or the like. However, even if this is succeeded, secondary problems may arise as described below.

Some moisture or the like, sticking to passenger's feet, is inevitably introduced into the automobile cabin (particularly, on the floor at the passenger's feet). When no piece mat is used, the moisture or the like introduced into the cabin will sink into the floor laying material over the years, and possibly stain the floor laying material and increase the flow resistance value of the floor laying material than the initial value. This also results in a change in the flow resistance value, thereby failing to provide the quietness, as originally designed, within the automobile cabin.

For the sound absorbing property within an automobile cabin, JP-2001-47926, which is an earlier application of the present application, discloses a sound absorbing effect when a single piece mat is laid. Conventionally, however, there has been no example of researches on the effect of a combination of a floor laying material and a piece mat.

Since many of conventional piece mats are intended for antifouling and waterproof, they are made of molded resin mats or rubber mats. For this reason, many of the conventional piece mats have no permeability and exhibit infinite flow resistance value. Such piece mats have sound wave reflecting property rather than sound wave reflecting property within the cabin of the automobile. Thus, a piece mat laid in a cabin of an automobile would reduce the sound absorbing property within the automobile cabin, resulting in a higher noise level. The inventors have confirmed this fact by a test using an actual automobile.

Reference is also directed to WO00/53456 which discloses a sound insulating structure cover panel that compliments the sound attenuation material. The method of manufacturing the panel comprises the steps of providing a laminated blank (2) having an interior face which will be observable from the passenger compartment. The side opposite the interior face of the blank has a generally non-permeable polymeric layer (14) adjacent to a primary backing (10) and a secondary backing layer (16) overlying the polymeric layer. In the preferred process, the previously described blank is elevated to a desired temperature and positioned in a closed forming mold (62) such that the perimeter of the blank is retained in a fixed position. The forming mold is closed with a controlled pressure that is sufficient to expand the blank, conform it to the mold and render a panel having a desired permeable.

Reference is also directed to WO 99/44817 which discloses a sound absorbent thin-layer laminate consisting of at least one open-cell support layer and a second open-cell fibre layer. The support layer consists either of a first fibre layer, especially a low-density non-woven material with a mass per unit area of less than 2,000 g/m$^2$ and a thickness of less than 50 mm, or of an open-cell foam layer, especially an ultra-light plastic foam with a density of between 16 and 32 kg/m$^3$ and a thickness of at least 6 mm. The second fibre layer is made of melt-blown microfibres, whose fibre diameter is approximately 1 to 10 $\mu$m, especially 2 to 5 $\mu$m. The air resistance of the thin-layer laminate is in the range of 500 < $R_t$ < 4,000 Ns/m$^3$. According to the method for producing the thin-layer laminate a microfibre layer of melt-blown microfibres with a diameter of between 1 and 10$\mu$ m, preferably between 2 and 5 $\mu$m, is fixed to the support layer by means of a spray-on adhesive.

The present invention has been made in view of the problems encountered with the foregoing prior arts, and its object is to provide a floor laying material, a piece mat, and an arranging structure thereof whose sound absorbing property and sound insulating property are optimized.

DISCLOSURE OF THE INVENTION

According to one aspect of the present invention, there is provided a floor laying material adapted to be laid on a floor panel provided within a cabin of a vehicle, comprising: a moldable carpet layer having dispersed therein a molding material made of a thermoplastic resin formed in a powder or a fiber state, the carpet layer after molding having a front-to-back air flow resistance value adjusted between 100 Nsm$^{-3}$ and 1000 Nsm$^{-3}$, and a buffer material layer made of a material having an air wrapping property layered on the back surface of said carpet layer, and having a front-to-back air flow resistance value adjusted between 40 Nsm$^{-3}$ and 800 Nsm$^{-3}$.

By adjusting the front-to-back flow resistance value in particular of the carpet layer to be between 100 Nsm$^{-3}$ and 1000 Nsm$^{-3}$, the sound absorbing properties of the floor laying material according to the present invention has been improved.

The sound absorption rate may be calculated by the following equation (1):

$$\text{Absorption Rate} = 4Rn/\{(Rn+1)^2 + Xn^2\} \dots \quad \text{Equation (1)}$$

where an acoustic resistance Rn has a value between one and two, and an acoustic reactance Xn indicates a higher sound absorption rate as it is closer to zero.

According to the above equation, the values of the acoustic resistance Rn and acoustic reactance Xn, which are parameters of the sound absorption rate are within a range in which the sound absorption rate is increased when the flow resistance value is in a range between 100 Nsm$^{-3}$ and 500 Nsm$^{-3}$. As the flow resistance value exceeds 500 Nsm$^{-3}$, the value of Rn gradually deviates from the range in which the sound absorption rate is increased, and as the flow resistance value exceeds 1000 Nsm$^{-3}$, both the values of Rn, Xn deviate from the range in which the sound absorption rate is increased. While the sound absorption rate is increased as well when the flow resistance value is adjusted to be less than 100 Nsm$^{-3}$, this is not practically favorable because in this case, a reduction is caused in the strength for bearing a pile and the like which constitute the design of the carpet layer, thus making the pile or the like more susceptible to come off. From this fact, it can be understood that a certain degree of effect can be practically provided with respect to an improvement on the sound absorbing property by adjusting the front-to-back flow resistance value of the carpet layer to be between 100 Nsm$^{-3}$ and 1000 Nsm$^{-3}$.

In view of the foregoing, the flow resistance value of the carpet layer is preferably adjusted between 100 Nsm$^{-3}$ and 500 Nsm$^{-3}$.

Joining strips made of a thermoplastic resin may be discontinuously arranged on the back surface of the carpet layer, such that the carpet layer and the buffer material layer are layered through the joining strips. When the joining strips made of a thermoplastic resin are discontinuously arranged on the back surface of the carpet layer, the buffer material layer can be adhered on the back surface of the carpet layer by heating the joining strips to serve as an adhesive without largely changing the flow resistance value of the carpet layer.

A molding material made of a thermoplastic resin formed in a powder or a fiber state is dispersed within the carpet layer.

Arranging the carpet layer dispersed therein with a molding material made of a thermoplastic resin formed in a powder or a fiber state as in the present invention makes it possible to adjust the flow resistance value of the carpet layer. An approach to provide such a molding material dispersed in the carpet layer may suitably involve uniformly mixing the molding material in the carpet layer, or uniformly dispersing the molding material between multiple layers which make up the carpet layer, and the like. The molding material thus dispersed in the carpet layer is plasticized by the heat which is applied when the carpet layer is molded to impart a molding property (shape maintaining property) to the carpet layer, and substantially enters into meshes of the fibrous carpet layer, while losing somewhat powder or fibrous form by a pressing force applied upon molding of the carpet layer, to be "filled in" part of meshes of the carpet layer. Within the carpet layer thus molded, the meshes "filled" with the molding material does not have permeability, while meshes not "filled" has permeability. Thus, by changing a proportion of mashes which are "filled" in the carpet layer, the flow resistance value of the carpet layer can be readily adjusted.

For example, the flow resistance value of the carpet layer can be readily adjusted by setting the size and arranging density of the powdery or fibrous molding material in accordance with molding conditions such as the temperature, a pressing force and the like upon molding of the carpet layer. In addition, changing the arranging density of the molding material can cause the flow resistance value of the carpet layer to partially change. On the other hand, when a conventional continuous sheet-like backing material is used as a material to impart the molding property to the carpet layer, it is difficult to finely adjust or partially adjust the flow resistance value of the carpet layer.

The flow resistance value of the carpet layer of the floor laying material laid at a position relatively near a prime mover equipped in the vehicle is preferably set to be lower than the flow resistance value of the carpet layer of the floor laying material laid at a position relatively far away from the prime mover. This makes it possible to reduce noise within the vehicle cabin caused by the prime mover.

The buffer material layer may be provided to have a thickness of 5 mm or more when it is laid on the floor panel. Further, the thickness of the buffer material layer may be 20 mm or more. The buffer material layer, which is made of a material having an air wrapping property, provides an air layer between the carpet layer and floor panel to contribute to a reduction in the noise level within the cabin. When the buffer material layer has the flow resistance value adjusted between 40 $Nsm^{-3}$ and 800 $Nsm^{-3}$ as mentioned above, its thickness chosen to be 5 mm or more, and preferably 20 mm or more is effective in reducing the noise level within the cabin.

A piece mat according to the present invention includes a knitted pile layer having knitted pile yam; a base cloth layer bearing the knitted pile layer; and a cushion material layer layered on the back surface of the base cloth material through discontinuously arranged joining strips made of a thermoplastic resin, wherein an air flow resistance value from the top surface of the knitted pile layer to the back surface of the cushion material layer is adjusted between 100 $Nsm^{-3}$ and 1500 $Nsm^{-3}$.

An investigation made by the present inventors, it showed that the arrangement of a piece mat having a flow resistance value between 100 $Nsm^{-3}$ and 1500 $Nsm^{-3}$ on the floor laying material according to the present invention is optimal in reducing the noise level within the cabin.

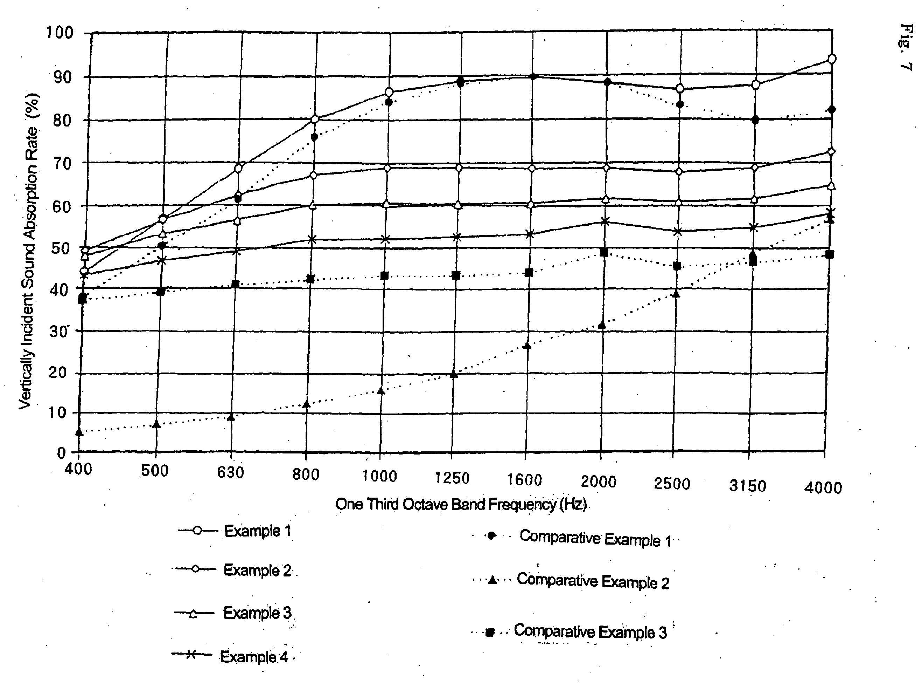

When the flow resistance value of the piece mat lies within this range, the sound absorbing property can be further improved in a composite (arranging structure) composed of the floor laying material of the present invention and the piece mat of the present invention arranged thereon, when the flow resistance value of the piece mat is 500 $Nsm^{-3}$ or less than when the floor laying material alone is arranged, as will be described with reference to Figs. 7 to 9 in examples described below. Also, when the flow resistance value of the piece mat is larger than 500 $Nsm^{-3}$, the sound absorbing property is degraded at certain frequencies, but the degradation can be compensated for by an improvement on a transmission loss (sound insulating property) resulting from the arrangement of the piece mat. In other words, by arranging the piece mat of the present invention, the flow resistance value of which is within the aforementioned range, on the floor laying material of the present invention, the noise level within the cabin can be reduced as compared with the case where no piece mat is arranged on the floor laying material, or with the case where a conventional impermeable piece mat, which completely hinders the sound absorbing property of the floor laying material, is arranged on the floor laying material.

Note that when the flow resistance of the piece mat exceeds 1500 $Nsm^{-3}$, the sound absorbing property is degraded so largely that the degradation cannot be compensated for by an improvement on the transmission loss (sound insulating property), provided by arranging the piece mat. As a result, the noise level within the cabin can be reduced as compared with the case where a conventional impermeable piece mat is arranged, but is higher than when the piece mat is not arranged. On the other hand, the sound absorption rate increases even when the flow resistance value of the piece mat is reduced to less than 100 $Nsm^{-3}$, in which case, however, the effect of bearing the knitted pile layer is reduced, causing the pile to be more susceptible to come off, and the like, so that this is not practically favorable.

Further, a flow resistance value from the top surface of the knitted pile layer to the back surface of the base cloth layer adjusted between 80 Nsm$^{-3}$ and 700 Nsm$^{-3}$, and a flow resistance value from the front to the back surface of the cushion material layer adjusted between 40 Nsm$^{-3}$ and 1000 Nsm$^{-3}$ are preferable in reducing the noise level within the cabin when the piece mat of the present invention is arranged on the floor laying material of the present invention.

An arranging structure of a floor laying material with a piece mat according to the present invention is composed of the aforementioned piece mat of the present invention arranged on the aforementioned floor laying material of the present invention.

According to the arranging structure of the present invention, the floor laying material and piece mat can demonstrate the optimal sound absorbing properties and sound insulating properties respectively exhibited thereby in the cabin. Even when the floor laying material of the present invention alone is arranged within the cabin, the sound absorbing property is improved over the case where a conventional floor laying material is arranged, thus making it possible to reduce the noise level within the cabin. However, by further arranging the piece mat of the present invention on the floor laying material of the present invention, the noise level within the cabin can be further reduced by synergy effects of the sound absorbing properties and sound insulating properties respectively exhibited by the floor laying material and piece mat.

Further, a portion on the surface of the carpet layer of the floor laying material on which the piece mat is arranged may be made lower than the remaining portion. According to this, even if the user attempts to lay a commercially available piece mat which is not conformal to the shape of a position at which the piece mat is laid on the floor laying material, it cannot be completely fitted thereon, so that a un-genuine piece mat can be prevented from being arranged. Also, since the user more readily recognizes the position at which the piece mat is arranged, the piece mat is not likely to be arranged at an erroneous position at which the sound absorbing property is not optimized even if the piece mat is arranged. Moreover, arranged piece mat is less susceptible to a shift in position.

Also, the sound absorbing property and sound insulating property exhibited by the arranging structure of the present invention can be optimally demonstrated by adjusting a portion comprised of the carpet layer of the floor laying material and the piece mat in a region in which the floor laying material overlaps with the piece mat to be between 1500 g/m$^2$ and 4500 g/m$^2$ per unit area, and adjusting a flow resistance value from the top surface of the piece mat to the back surface of the carpet layer to be between 150 Nsm$^{-3}$ and 1800 Nsm-3.

Further, at least one of the floor laying material and the piece mat may include at least one of a water-repellent layer made of a water repellent material which rejects water, and a water absorbing layer made of a material which absorbs water. In this way, for example, moisture or the like sticking at the feet of passengers and introduced into the cabin can be prevented from impregnating into the piece mat or floor laying material, so that the sound absorbing property and sound insulating property exhibited by the piece mat and floor laying material can be prevented from being degraded by such moisture or the like.

Further, the buffer material layer of the floor laying material and the cushion material layer of the piece mat may be formed with a large number of pores which wrap air at least in a portion thereof. In this way, it is possible to improve the cushioning property of the overall arranging structure, and adjust the sound absorbing property and sound insulating property.

BRIEF DESCRIPTION OF THE DRAWINGS

Fig. 1 is a cross-sectional view illustrating a floor laying material according to an embodiment of the present invention;

Fig. 2 is a graph showing a noise level at the positions of ears of a driver and a passenger on a rear seat in a cabin;

Fig. 3 is a graph showing the result of measuring the noise level at intervals of 25 cm from a position close to a carpet layer at the feet of the driver to the position of the ear of the driver within the cabin for 160 Hz and 250 Hz which are frequencies at which the noise level is the highest;

Fig. 4 is a graph showing the result of measuring the noise level at intervals of 25 cm from a position close to the carpet layer at the feet of the passenger on the rear seat to the position of the ear of the passenger on the rear seat within the cabin for 160 Hz and 250 Hz which are frequencies at which the noise level is the highest;

Fig. 5 is a cross-sectional view illustrating a piece mat according to an embodiment of the present invention;

Fig. 6 is a cross-sectional view illustrating the state in which the piece mat illustrated in Fig. 5 is laid on the floor laying material illustrated in Fig. 1;

Fig. 7 is a graph showing the result of measuring a vertically incident sound absorption rate in a range of 400 to 4000 Hz within a laboratory;

Fig. 8 is a graph showing the result of measuring a transmission loss in a range of 400 to 4000 Hz within the laboratory; and

Fig. 9 is a graph showing the result of measuring the noise level, using an actual automobile, at the position of the ear of the driver within the automobile cabin.

BEST MODE FOR CARRYING OUT THE INVENTION

(Floor Laying Material)

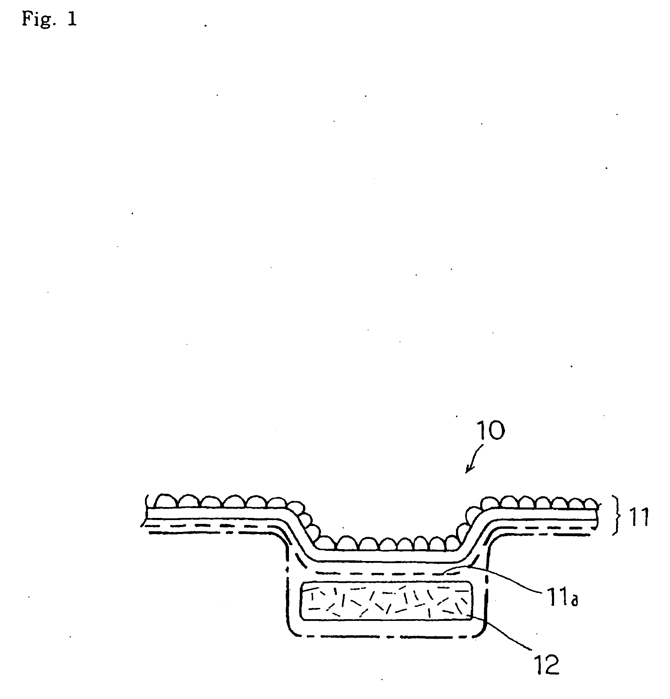

Fig. 1 is a cross-sectional view illustrating a floor laying material according to an embodiment of the present invention.

Floor laying material 10 according to this embodiment, which is laid on a floor panel in a cabin of an automobile, comprises carpet layer 11 having discontinuous joining strips 11a made of a thermoplastic resin on the back surface; and a buffer material layer 12 layered on the back surface of carpet layer 11 through joining strips 11a.

Carpet layer 11 contains a molding material (not shown) made of a melt fiber, powder or the like, the melting point temperature of which is relatively low. The melt fiber or powder is preferably distributed substantially uniformly within carpet layer 11. Used as a technique for distributively mixing the melt fiber or powder within carpet layer 11 may be a technique for uniformly mixing the melt fiber or powder within carpet layer 11, or a technique for uniformly dispersing the molding material between a plurality of layers which make up carpet layer 11.

Floor laying material 10, which is laid on a floor panel within an automobile cabin that includes a lot of non-planar regions, must be molded in a shape conformal to the floor panel. When carpet layer 11 contains the melt fiber or powder, the melting point of which is relatively low, the plasticity develops by heating carpet layer 11, thereby making it possible to readily mold carpet layer 11 in the shape conformal to the floor panel within the automobile cabin.

Further, the melt fiber or powder contained in carpet layer 11 contribute to interlocking of fibers, which make up carpet layer 11, to each other, and can also be used for adjusting the flow resistance value of carpet layer 11 within a target range.

On the other hand, joining strips 11a are formed by dispersing, for example, a low-melting point thermoplastic resin, having a relatively low melting point, on the back surface of carpet layer 11 in a powder form or in a fiber form. The areal density of the dispersion in this event is preferably in a range of 30 to 200 g/m$^2$. According to this, after joining strips 11a made of a low-melting point thermoplastic resin are dispersed on the back surface of carpet layer 11, joining strips 11 a are directly heated, or is indirectly heated by heating carpet layer 11, thereby causing joining strips 11a to plasticize. Then, buffer material layer 12 is adhered to the back surface of carpet layer 11 when joining strips 11a are plasticizing. Consequently, plasticizing joining strips 11a interlocks with carpet layer 11 and buffer material layer 12, and adheres the two when it solidifies. In this event, since carpet layer 11 and buffer material layer 12 are discontinuously adhered by dispersed joining strips 11a on a point-to-point basis, the permeability exhibited by carpet layer 11 will not be lost.

Carpet layer 11 is not provided with a backing or the like which has the nature of blocking ventilation, and has its front-to-back flow resistance value adjusted between 100 Nsm$^{-3}$ and 1000 Nsm$^{-3}$, preferably between 100 Nsm$^{-3}$ and 500 Nsm$^{-3}$. As a means for adjusting the flow resistance value of carpet layer 11, any means is possible, and for example, pores partially pierced through carpet layer 11 is included as well.

A material suitable for buffer material layer 12 has an air wrapping property, and is a "firm" one which has a resiliency enough to withstand pressures. As a material for buffer material layer 12, for example, there is a mixed fiber mat made of polyester fiber (95 - 50 wt%) and a low-melting point thermoplastic fiber (5 - 50 wt%), described in Japanese Utility Model Registration No. 25557108. Other than this, a resin foam such as urethane foam or the like can be used as the material for buffer material layer 12.

Buffer material layer 12 preferably has a thickness of 5 mm or more when it is laid, and preferably 20 mm or more. While buffer material layer 12 may be molded, a thickness of 5 mm or more is ensured substantially over all sites. Also, buffer material layer 12 has its flow resistance value adjusted between 40 Nsm$^{-3}$ and 800 Nsm$^{-3}$. Buffer material layer 12, which is made of a material having the air wrapping property, as mentioned above, provides an air layer between carpet layer 11 and floor panel (not shown), thus contributing to a reduction in noise level within the cabin. In addition, when buffer material layer 12 has the flow resistance value adjusted between 40 Nsm$^{-3}$ and 800 Nsm$^{-3}$, its thickness adjusted to be 5 mm or more, and preferably 20 mm or more is effective for reducing the noise level within the cabin.

Note that even a material poor in the air wrapping property can be used as a material for buffer material layer 12 by piercing a large number of holes therethrough to provide the material with an air wrapping property. For example, in a vertical wall portion such as a tunnel which requires rigidity for a laying material (carpet layer), a hard sheet or the like, which does not tend to wrap air, must be laid as buffer material layer 12. Even in this case, the hard sheet or the like can be provided with an air wrapping property by piercing the hard sheet or the like.

Also preferably, the flow resistance value of carpet layer 11 of floor laying material 10 placed at a position relatively close to a prime mover (engine) of an automobile is set lower than the flow resistance value of carpet layer 11 of floor laying material 10 placed at a position relatively away from the engine. In this way, it is possible to reduce noise due to the engine within the cabin.

In the following, description will be made on the results of experiments which demonstrate the reason for which the noise within the cabin is reduced by the foregoing configuration.

The inventors ran an experimental vehicle, which was a sedan type automobile provided with an engine, the displacement of which is 3000 cc, on the front side, at a velocity of 60 km per hour on a dynamo which corresponded to a rough road surface to measure the noise levels with microphones mounted at a variety of locations within the automobile cabin when a floor laying material having a carpet layer A, the flow resistance value of which is 400 Nsm$^{-3}$ was laid within the automobile cabin, and when a floor laying material having a carpet layer B, the flow resistance value of which is 2000 Nsm$^{-3}$ was laid

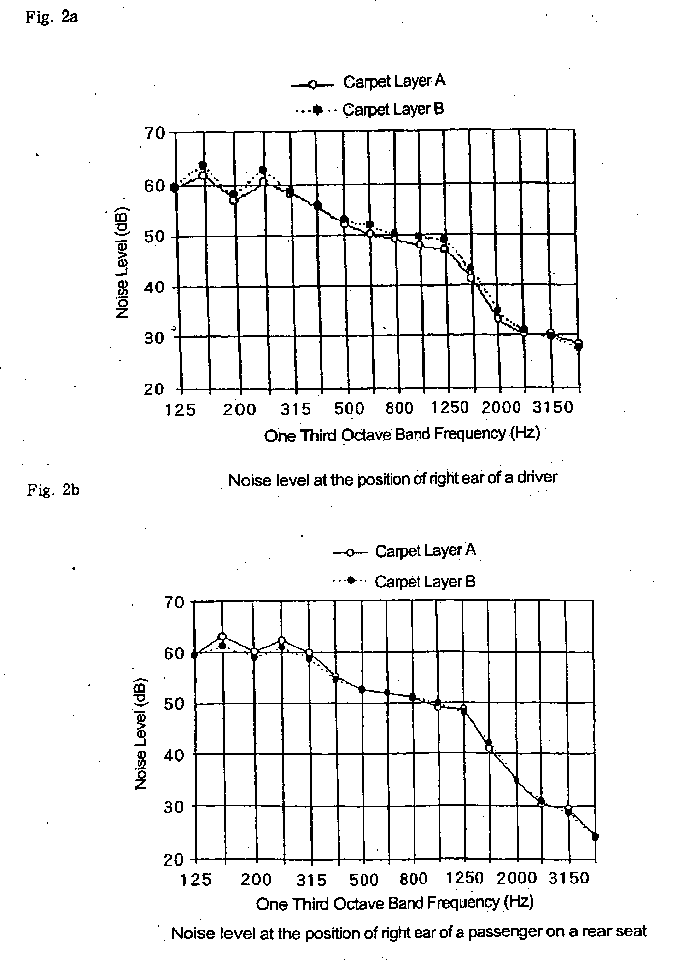

Fig. 2a is a graph showing the noise level at the position of an ear of a driver within the cabin (at a position at which the driver hears noise), and Fig. 2b is a graph showing the noise level at the position of an ear of a passenger on a rear seat within the cabin (at a position at which the passenger on the rear seat hears noise). It can be seen from Figs. 2a, 2b that the noise level is higher at frequencies of 160 Hz and 250 Hz both at the position of the ear of the driver and at the position of the ear of the passenger on the rear seat. It can be further seen from Fig. 2a that the noise level at 160 Hz and 250 Hz is lower at the position of the ear of the driver with the carpet layer A having a smaller flow resistance value, and from Fig. 2b that the noise level at 160 Hz and 250 Hz is lower at the position of the ear of the passenger on the rear seat with the carpet layer B having a larger flow resistance value.

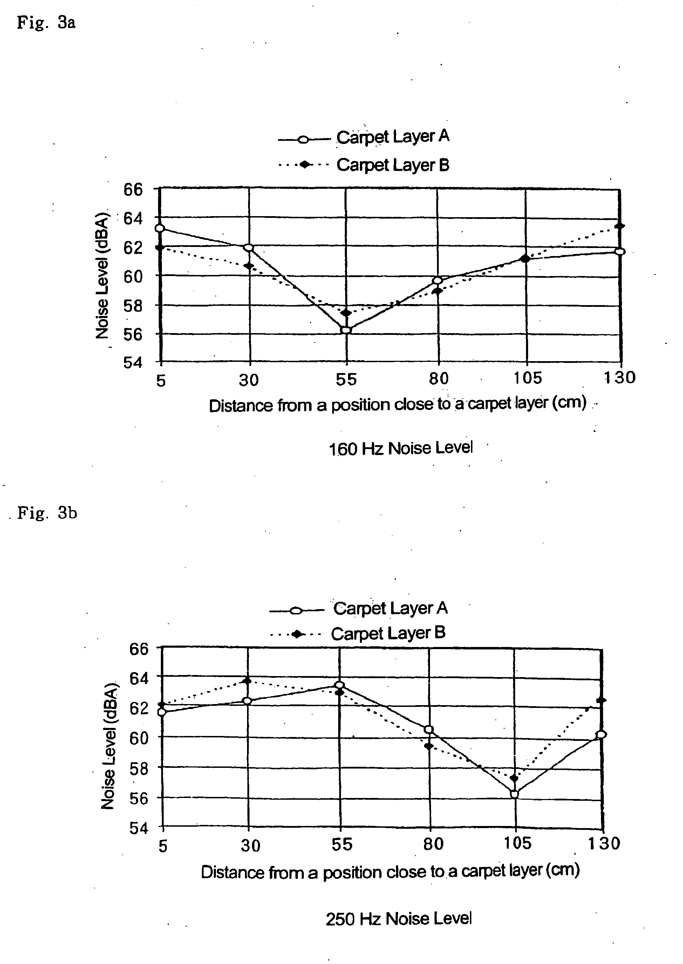

Figs. 3a and 3b are graphs showing the results of measuring the noise level at intervals of 25 cm from a position in close proximity to the carpet layer at the driver's feet (at a position distanced by 5 cm above the surface of the carpet layer) to the position of the ear of the driver (at a position distanced by 130 cm above the surface of the carpet layer) within the cabin for the frequencies 160 Hz and 250 Hz at which the highest noise level was measured. Fig. 3a shows the case with 160 Hz, while Fig. 3b shows the case with 250 Hz.

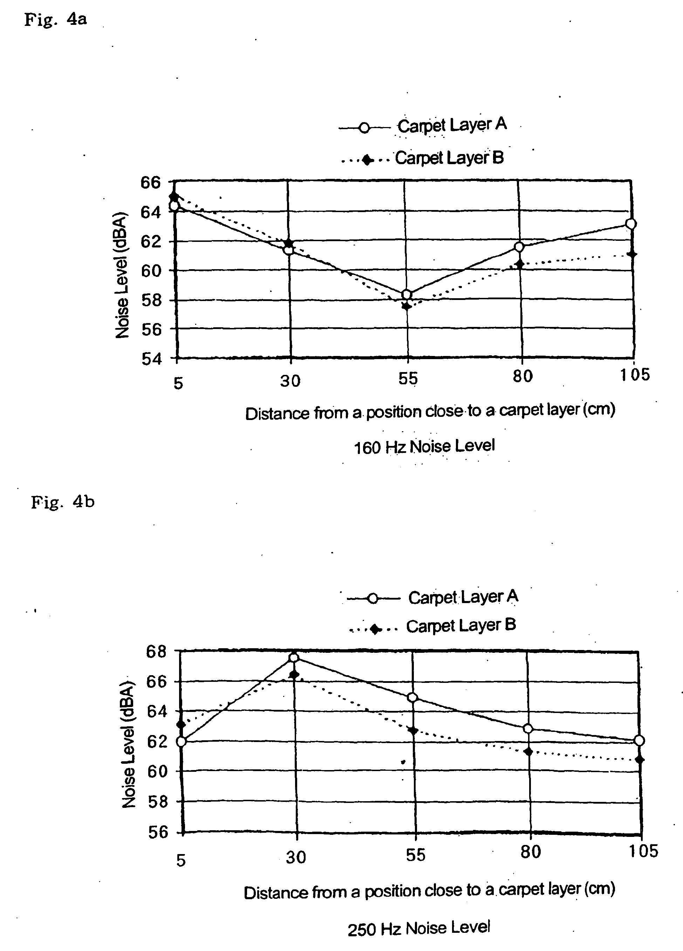

Also, Figs. 4a and 4b are graphs showing the results of measuring the noise level at intervals of 25 cm from a position in close proximity to the carpet layer at the feet of the passenger on the rear seat (at a position distanced by 5 cm above the surface of the carpet layer) to the position of the ear of the passenger on the rear seat (at a position distanced by 105 cm above the surface of the carpet layer) within the cabin for the frequencies 160 Hz and 250 Hz at which the highest noise level was measured. Fig. 4a shows the case with 160 Hz, while Fig. 4b shows the case with 250 Hz.

It can be seen from Figs. 3a, 3b and Figs. 4a, 4b that the noise level varies depending on the distance from the carpet layer. Presumably, this is because a spatial acoustic mode within the automobile cabin varies depending on the position due to the flow resistance value of the carpet layer.

Now, paying attention to the position of the ear of the driver (at the position distanced by 130 cm above the surface of the carpet layer) and the position of the ear of the passenger on the rear seat (at the position distanced by 105 cm above the surface of the carpet), it can be seen that the noise level at the position of the driver was lower when the carpet layer A was used (see Figs. 3a, 3b), while the noise level at the position of the ear of the passenger on the rear seat was lower when the carpet layer B was used (see Figs. 4a, 4b). In other words, it can be understood that the noise level can be generally reduced within the cabin by setting a relatively low flow resistance value of carpet layer 11 at the position of the ear of the driver, which is a position relatively near the engine, and setting a relatively high flow resistance value of carpet layer 11 at the position of the ear of the passenger on the rear seat, which is a position relatively away from the engine. The difference of the flow resistance value of carpet layer 11 which should be provided between a position relatively near the engine and a position relatively away from the engine is preferably set one by one depending on the shape of the cabin and the like such that well-balanced sound absorbing property and sound insulating property can be exerted over the whole cabin.

While the foregoing has shown an example of adhering carpet layer 11 and buffer material layer 12 using joining strips 11 a, carpet layer 11 and buffer material layer 12 need not be necessarily adhered to each other, and for example, the configuration may be such that carpet layer 11 is simply placed on buffer material layer 12.

(Piece Mat)

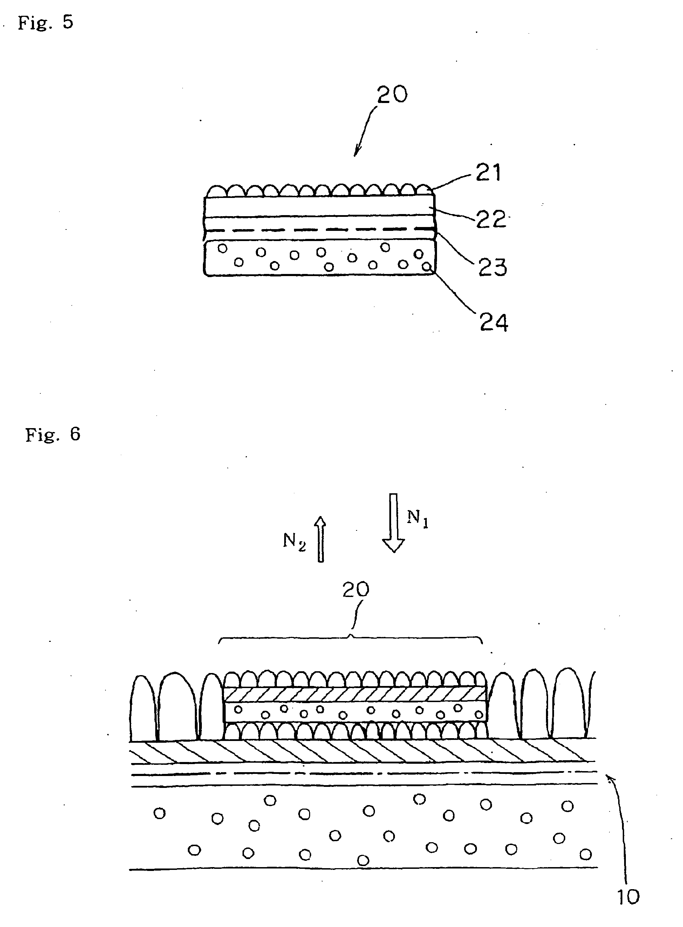

Fig. 5 is a cross-sectional view illustrating a piece mat according to an embodiment of the present invention.

As illustrated in Fig. 5, piece mat 20 of this embodiment comprises knitted pile layer 21 made of knitted pile yarn; base cloth layer 22 which bears knitted pile layer 21; and cushion material layer 24 layered with discontinuous joining strips 23 intervening between the back surface of base cloth layer 22 and cushion material layer 24, and has permeability from the top surface of knitted pile layer 21 to the back surface of cushion material layer 24. This piece mat 20 is preferably fabricated by laying base cloth layer 22 which bears knitted pile layer 21 on cushion material layer 24 with discontinuously arranged joining strips 23 made of low-melting point thermoplastic resin sandwiched therebetween, plasticizing joining strips 23 by heating it with ventilation by a suction heater (not shown), and thereafter pressing base cloth layer 22 and cushion material layer 24 with a press roller (not shown).

Piece mat 20 preferably has its periphery fused together with base cloth layer 22 and cushion material layer 24 for trimming. The cut surface trimmed by fusing has an improved aestheticity. When base cloth layer 22 and cushion material layer 24 are made of a thermoplastic material, the periphery of piece mat 20 can be fused, for example, by irradiating laser light.

Materials used for the respective components (knitted pile layer 21, base close layer 22, cushion material layer 24) of piece mat 20 can be the same types of materials as carpet layer 11 and buffer material layer 12 of the aforementioned floor laying material 10. As preferred examples, polypropylene fibers or nylon fibers at 500 - 1300 g/m$^2$ per unit area having a pile height of 5 to 15 mm can be used for knitted pile layer 21; a polyester span bond at 80 to 150 g/m$^2$ per unit area having the back surface of a base cloth applied with latex work at relatively low weight per unit area can be used for base cloth layer 22; and polyester unwoven fabric at 100 to 700 g/m$^2$ per unit area of 2 to 5 mm thick or soft urethane foam at 40 to 500 g/cm$^2$ per unit area of 2 to 5 mm thick, which has regular fibers (70 - 90 wt%), the fiber size of which is 4 to 30 denir mixed with low melting point fibers, the fiber size of which is 2 to 6 denir (10-30 wt%), can be used for cushion material layer 24.

When the flow resistance value from the top surface of knitted pile layer 21 to the back surface of cushion material layer 24 of piece mat 20 is adjusted between 100 Nsm$^{-3}$ and 1500 Nsm$^{-3}$, the sound absorbing property and sound insulating property are enhanced when piece mat 20 is placed on floor laying material 10 (see Fig. 1), thus reducing noise within the cabin. For adjusting the sound absorbing property and sound insulating property, cushion material layer 24 and the like may be pierced.

For the flow resistance value of knitted pile layer 21 and base cloth layer 22 and the flow resistance value of cushion material layer 24, in this embodiment, the flow resistance value from the top surface of knitted pile layer 21 to the back surface of basic cloth layer 22 is adjusted between 80 Nsm$^{-3}$ and 700 Nsm$^{-3}$, and the front-to-back flow resistance value of cushion material layer 24 is adjusted between 40 Nsm$^{-3}$ and 1000 Nsm$^{-3}$.

(Arranging Structure of Floor Laying Material and Piece Mat)

Fig. 6 is a cross-sectional view illustrating a state where the piece mat illustrated in Fig. 5 is arranged on the floor laying material illustrated in Fig. 1.

For allowing the arranging structure comprised of floor laying material 10 and piece mat 20 arranged thereon to exert an optimal sound absorbing property and sound insulating property, the best technique will involve conducting an actual vehicle running test, measuring a noise level within the cabin in which piece mat 20 is placed at each position on floor laying material 10, and finding an optimal position at which piece mat 20 should be arranged for each actual vehicle.

However, from the results of previously measuring noise levels for a large number of different automobiles and analyzing the noise levels utilizing software, it has been found that the following criteria (1) - (3) must be generally satisfied for an optimal arrangement of piece mat 20 on floor laying material 10 in order to reduce the noise level within the cabin.

(1) A portion comprised of carpet layer 11 of floor laying material 10 and piece mat 20 in a region in which floor laying material 10 overlaps with piece mat 20 is adjusted between 1500 g/m$^2$ and 4500 g/m$^2$ per unit area, and the flow resistance value from the top surface of piece mat 20 to the back surface of carpet layer 11 is adjusted between 150 Nsm$^{-3}$ and 1800 Nsm$^{-3}$.

(2) At least portions below the feet of passengers (at the feet of at least passengers on front seats for a passenger car) are flat.

(3) No gap is produced in a divided portion of piece mat 20 or between piece mat 20 and floor laying material 10.

Thus, an optimal sound absorbing property and sound insulating property can be achieved for the arranging structure by constructing the arranging structure to comply with the foregoing criteria without relying on an actual vehicle test. In the arranging structure of the floor laying material with the piece mat illustrated in Fig. 6, within sound waves present in the cabin, component $N_1$ travelling in the direction of piece mat 20 passes through piece mat 20, reaches floor laying material 10, and is absorbed by floor laying material 10 at a high ratio. For this reason, within component $N_1$ which has reached floor laying material 10, component $N_2$ reflected by floor laying material 10 is largely reduced, thus reducing the noise within the cabin.

Piece mat 20 preferably has elasticity to deform in conformity to the shape of a position on which it is laid on floor laying material 10, so that a large gap is not left between piece mat 20 and floor laying material 10 when it is laid on floor laying material 10.

A portion on the surface of carpet layer 11 (see Fig. 1) of floor laying material 10 on which piece mat 20 is laid is made lower than the remaining portion. Thus, even if the user attempts to lay a commercially available piece mat which is not conformal to the shape of a position at which piece mat 20 is laid on floor laying material 10, it cannot be completely fitted thereon, so that a un-genuine piece mat can be prevented from being arranged. Also, since the user more readily recognizes the position at which piece mat 20 is arranged, the piece mat is not likely to be arranged at an erroneous position at which the sound absorbing property is not optimized even if the piece mat is arranged. Moreover, arranged piece mat 20 is less susceptible to a shift in position after it has been arranged.

As a technique for making the portion on the surface of carpet layer 11 of floor laying material 10, on which piece mat 20 is arranged, lower than the remaining portion, a technique for molding this portion lower than the remaining portion may be used when carpet layer 11 is molded, or as illustrated in Fig. 6, a technique may be employed for making the height of the pile in a portion of the surface of carpet 11, on which piece mat 20 is arranged, lower than the pile in the remaining portion.

Also, at least one of floor laying material 10 and piece mat 20 is preferably provided with at least one of a water-repellent layer made of a water repellent material which rejects water, and a water absorbing layer made of a material which absorbs material. In this way, for example, moisture or the like sticking at the feet of passengers and introduced into the cabin can be prevented from impregnating into piece mat 20 or floor laying material 10, so that the sound absorbing property and sound insulating property exhibited by piece mat 20 and floor laying material 10 can be prevented from being degraded by such moisture or the like.

Further, buffer material layer 12 (see Fig. 1) of floor laying material 10 and cushion material layer 24 (see Fig. 5) of piece mat 20 may be provided with a large number of air wrapping pores at least in a portion thereof. This can improve the cushioning property of the overall arranging structure, and adjust the sound absorbing property and sound insulating property.

Next, description will be made on examples of the floor laying material, piece mat, and arranging structure thereof, described above.

(Configuration of Each Example and Each Comparative Example)

<Example 1>

On the following permeable floor laying material 10, the following piece mat 20 was arranged.

Used for floor laying material 10 in this example was one which was fabricated by laminating buffer material layer 12 made of polyester fiber felt having a thickness of 30 mm and a density of 0.1 g/cm$^3$ on carpet layer 11 made of a needle punch carpet having a flow resistance value of 400 Nsm$^{-3}$.

Also, used for piece mat 20 in this example was one having a flow resistance value of 100 Nsm$^{-3}$ which was fabricated by layering cushion material layer 24 made of polyester resin unwoven fabric at 100 g/m$^2$ per unit area on base cloth layer 22 which bore knitted pile layer 21 at 600 g/m$^2$ per unit area, with the back surface of the base cloth at 120 g/m$^2$ per unit area being applied with latex work of an SBR (styrene-butadiene-rubber) resin, through an adhesive layer, as joining strips 23, formed by dispersing short fibers of polyethylene resin at 100 g/m$^2$ per unit area.

<Example 2>

On the same floor laying material 10 as Example 1, the following piece mat 20 was arranged.

Used for piece mat 20 in this example was one having a flow resistance value of 500 Nsm$^{-3}$ which was fabricated by adhering cushion material layer 24 made of polyester resin unwoven fabric at 250 g/m$^2$ per unit area on base cloth layer 22 which bore knitted pile layer 21 of 600 g/m$^2$ per unit area, with the back surface of the base cloth at 120 g/m$^2$ per unit area being applied with latex work of an SBR resin, through an adhesive layer, as joining strips 23, formed by dispersing short fibers of polyethylene resin at 150 g/m$^2$ per unit area.

<Example 3>

On the same floor laying material 10 as Example 1, the following piece mat 20 was arranged.

Used for piece mat 20 in this example was one having a flow resistance value of 1000 Nsm$^{-3}$ which was fabricated by adhering cushion material layer 24 made of polyester resin unwoven fabric at 550 g/m$^2$ per unit area on base cloth layer 22 which bore knitted pile layer 21 of 600 g/m$^2$ per unit area, with the back surface of the base cloth at 120 g/m$^2$ per unit area being applied with latex work of an SBR resin, through an adhesive layer, as joining strips 23, formed by dispersing short fibers of polyethylene resin at 350 g/m$^2$ per unit area.

<Example 4>

On the same floor laying material 10 as Example 1, the following piece mat 20 was arranged.

Used for piece mat 20 in this example was one having a flow resistance value of 1500 Nsm$^{-3}$ which was fabricated by adhering cushion material layer 24 made of polyester resin unwoven fabric of 700 g/m$^2$ per unit area on base cloth layer 22 which bore knitted pile layer 21 at 600 g/m2 per unit area, with the back surface of the base cloth of 120 g/m$^2$ per unit area being applied with latex work of an SBR resin, through an adhesive layer, as joining strips 23, formed by dispersing short fibers of polyethylene resin at 500 g/m$^2$ per unit area.

[Comparative Example 1]

Only the same floor laying material 10 as Example 1 was used, but no piece mat was arranged on floor laying material 10. In other words, in this comparative example, the flow resistance value of the piece mat is zero.

[Comparative Example 2]

On the same floor laying material 10 as Example 1, the following piece mat was arranged.
Used for the piece mat in this comparative example was impermeable one which was applied with a gummous backing material at 1300 g/m$^2$ per unit area on the back surface of a base cloth of 120 g/m$^2$ per unit area which bore a knitted pile layer of 600 g/m$^2$ per unit area. In other words, in this comparative example, the flow resistance value of the piece mat is infinite.

[Comparative Example 3]

On the same floor laying material 10 as Example 1, the following piece mat 20 was arranged.
Used for piece mat 20 in this comparative example was one having a flow resistance value of 2000 Nsm$^{-3}$ which was fabricated by layering cushion material layer 24 made of polyester resin unwoven fabric at 800 g/m$^2$ per unit area on base cloth layer 22 which bore knitted pile layer 21 of 600 g/m$^2$ per unit area, with the back surface of the base cloth at 120 g/m$^2$ per unit area being applied with latex work of an SBR resin, through an adhesive layer, as joining strips 23, formed by dispersing short fibers of polyethylene resin at 550 g/m$^2$ per unit area.

(Evaluating Method)

(1) Evaluation of Vertically Incident Sound Absorption Rate and Transmission Loss (Sound Insulation) in Laboratory:

Samples were fabricated corresponding to arranging structures of the floor laying material with the piece mat of each example and each comparative example, and the sound absorption rate was measured in a range of 400 to 4000 Hz when noise was incident on each of these samples from a pile direction of the piece mat, and the results of the measurements were compared with one another. Also, for each of combinations of the respective samples with a panel made of a steel plate of 0.8 mm thick, similar to the actual vehicle, a transmission loss was measured in a range of 400 to 4000 Hz when noise was incident from the panel side, and the results of the measurements were compared with one another.

(2) Evaluation on Noise Level within Automobile Cabin with Actual Vehicle:

Samples corresponding to arranging structures of the floor laying material and piece pat of each example and each comparative example were placed in an experimental vehicle which was sedan type automobile provided with an engine, the displacement of which was 2500 cc, on the front side, and the experimental vehicle was run at a constant velocity of 60 km per hour on a dynamo which corresponded to a rough road surface to measure a noise level in a range of 125 to 4000 Hz with a microphone placed at the position of an ear of a driver in the automobile cabin.
The piece mats were set at feet of a driver's seat, an assistant's seat, and a rear seat, and above a tunnel of the rear seat. A total area of the surfaces of the piece mats was set to approximately 1.5 m$^2$. In this event, the area of the surfaces of the piece mats occupies approximately 30 % of the area of the surface of the floor laying material.

(Evaluation Result)

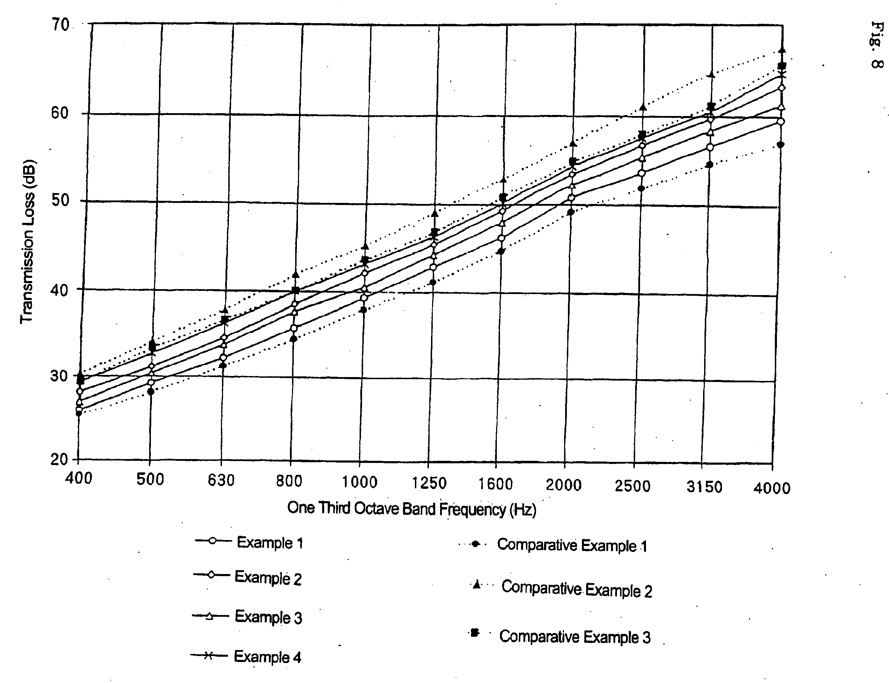

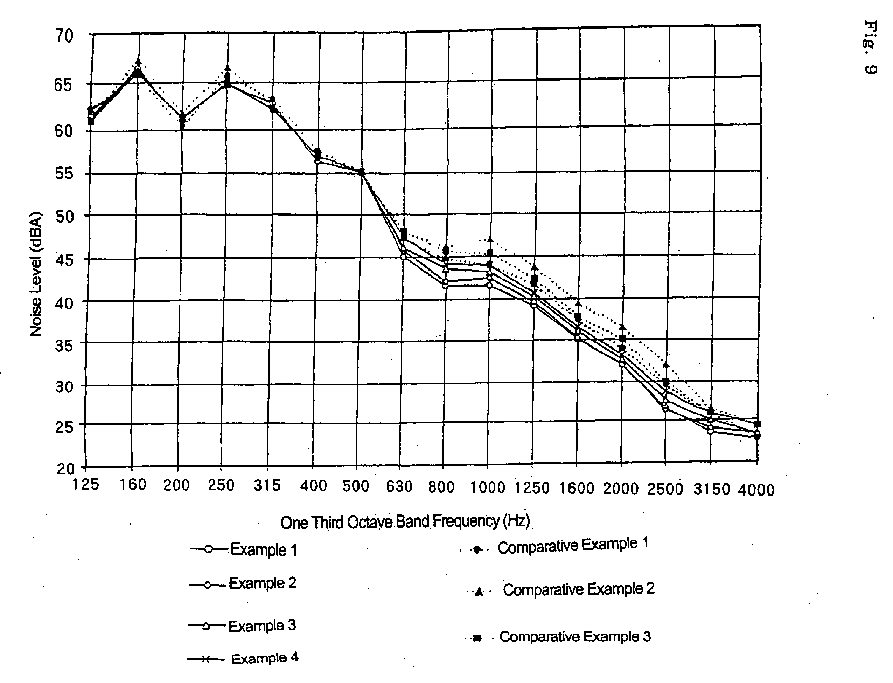

Fig. 7 is a graph showing the result of measuring the vertically incident sound absorption rate in the range of 400 to 4000 Hz in the laboratory, Fig. 8 is a graph showing the result of measuring the transmission loss in the range of 400 to 4000 Hz in the laboratory, and Fig. 9 is a graph showing the result of measuring the noise level at the position of the ear of the driver within the cabin of the actual vehicle.
Except for Comparative Example 1, the flow resistance value of the piece mat is the smallest in Example 1, and is smaller in the order of Examples 2, 3, 4, and further smaller in the order of Comparative Examples 3, 2. From the foregoing, It can be understood from Fig. 7 that the vertically incident sound absorption rate is higher substantially over the whole frequency band in the order in which the piece mats have smaller flow resistance values. Contrary to this, it can be understood from Fig. 8 that the transmission loss is higher substantially over the whole frequency range in the order in which the piece mats have higher flow resistance values. Also, it can be understood from Fig. 9 that the noise level at the position of the ear of the driver within the automobile cabin is higher over the whole frequency band in the order in which the piece mats have higher flow resistance values.

Here, Comparative Example 1 presents the flow resistance value of the piece mat which is substantially zero, and as shown in Fig. 7, the vertically incident sound absorption rate of Comparative Example 1 is lower than Example 1 though the flow resistance value is smaller than that of Example 1. Presumably, this is because, though the piece mat itself also absorbs vertically incident sound to some degree, Comparative Example 1 has no piece mat, so that it cannot benefit from the sound absorbing property exhibited by the piece mat itself.

While the foregoing description has been made using an example in which floor laying material 10 and piece mat 20 are arranged within a cabin of a passenger automobile, the sound absorbing effect and sound insulating effect described above can be provided as well when these floor laying material 10 and piece mat 20 are arranged in a cabin of a bus or a track, or in a cabin of any vehicle such as a ship, a train, an airplane, and the like.

**Claims**

1.  A floor laying material adapted to be laid on a floor panel provided within a cabin of a vehicle, comprising:

    a moldable carpet layer having dispersed therein a molding material made of a thermoplastic resin formed in a powder or a fiber state, the carpet layer after molding having a front-to-back air flow resistance value adjusted between 100 Nsm$^{-3}$ and 1000 Nsm$^{-3}$; and
    a buffer material layer made of a material having an air wrapping property, layered on the back surface of said carpet layer, and having a front-to-back air flow resistance value adjusted between 40 Nsm$^{-3}$ and 800 Nsm$^{-3}$.

2.  The floor laying material according to claim 1, wherein said air flow resistance value of said carpet layer is adjusted between 100 Nsm$^{-3}$ and 500 Nsm$^{-3}$.

3.  The floor laying material according to claim 1 or 2, wherein joining strips made of a thermoplastic resin are discontinuously arranged on the back surface of said carpet layer, such that said carpet layer and said buffer material layer are layered through said joining strips.

4.  The floor laying material according to any of claims 1 to 3, wherein said buffer material layer is provided to have a thickness of 5 mm or more when laid on said floor panel.

5.  The floor laying material according to claim 4, wherein said thickness of said buffer material layer is 20 mm or more.

6.  A method of laying on a floor panel provided within a cabin of a vehicle floor laying material according to any of claims 1 to 3, wherein said flow resistance value of said carpet layer of said floor laying material laid at a position substantially near a prime mover equipped in said vehicle is set to be lower than said air flow resistance value of said carpet layer of said floor laying material laid at a position relatively away from said prime mover.

7.  A piece mat comprising a knitted pile layer having knitted pile yarn; a base cloth layer bearing said knitted pile layer; and a cushion material layer layered on the back surface of said base cloth layer through discontinuously arranged joining strips made of a thermoplastic resin,
    wherein an air flow resistance value from the top surface of said knitted pile layer to the back surface of said cushion material layer is adjusted between 100 Nsm$^{-3}$ and 1500 Nsm$^{-3}$.

8.  The piece mat according to claim 7, wherein an air flow resistance value from the top surface of said knitted pile layer to the back surface of said base cloth layer is adjusted between 80 Nsm$^{-3}$ and 700 Nsm$^{-3}$, and a front-to-back flow resistance value of said cushion material layer is adjusted between 40 Nsm$^{-3}$ and 1000 Nsm$^{-3}$.

9.  An arranging structure of a floor laying material and a piece mat, wherein the piece mat according to claim 7 or 8 is arranged on the floor laying material according to any of claims 1 to 5 after molding of said floor laying material.

10. The arranging structure of a floor laying material and a piece mat according to claim 9, wherein a portion on the surface of said carpet layer of said floor laying material on which said piece mat is arranged is made lower than the remaining portion.

**11.** The arranging structure according to claim 9 or 10, wherein a portion comprised of said carpet layer of said floor laying material and said piece mat in a region in which said floor laying material overlaps with said piece mat is adjusted between 1500 g/m$^2$ and 4500 g/m$^2$, and an air flow resistance value from the top surface of said piece mat to the back surface of said carpet layer is adjusted between 150 Nsm$^{-3}$ and 1800 Nsm$^{-3}$.

**12.** The arranging structure according to any of claims 9 to 11, wherein at least one of said floor laying material and said piece mat comprises at least one of a water-repellent layer made of a water repellent material which rejects water, and a water absorbing layer made of a material which absorbs water.

**13.** The arranging structure according to any of claims 9 to 12, wherein said buffer material layer of said floor laying material and said cushion material layer of said piece mat are formed with a plurality of pores which wrap air, at least in a portion thereof.

**Patentansprüche**

**1.** Bodenverlegematerial, das angepasst ist, um auf einem in einem Fahrerhaus eines Fahrzeugs vorgesehenen Bodenblech verlegt zu werden, umfassend:

eine formbare Teppichlage, in der eine aus einem Thermoplast hergestellte Formmasse verteilt ist, die in einem Pulver- oder Faserzustand gebildet ist, wobei die Teppichlage nach Formen einen Vorderseite-Rückseite-Luftstromwiderstandswert aufweist, der zwischen 100 Nsm$^{-3}$ und 1000 Nsm$^{-3}$ eingestellt ist; und
eine Puffermateriallage, die aus einem Material hergestellt ist, das eine lufteinschließende Eigenschaft aufweist, die auf der Rückseite der Teppichlage geschichtet ist und einen Vorderseite-Rückseite-Luftstromwiderstandswert aufweist, der zwischen 40 Nsm$^{-3}$ und 800 Nsm$^{-3}$ eingestellt ist.

**2.** Bodenverlegematerial nach Anspruch 1, bei dem der Luftstromwiderstandswert der Teppichlage zwischen 100 Nsm$^{-3}$ und 500 Nsm$^{-3}$ eingestellt ist.

**3.** Bodenverlegematerial nach Anspruch 1 oder 2, bei dem aus einem Thermoplast hergestellte Verbindungsstreifen auf der Rückseite der Teppichlage unzusammenhängend angeordnet sind, so dass die Teppichlage und die Puffermateriallage durch die Verbindungsstreifen geschichtet sind.

**4.** Bodenverlegematerial nach einem der Ansprüche 1 bis 3, bei dem die Puffermateriallage so vorgesehen ist, dass sie nach Verlegen auf dem Bodenblech eine Dicke von 5 mm oder mehr aufweist.

**5.** Bodenverlegematerial nach Anspruch 4, bei dem die Dicke der Puffermateriallage 20 mm oder mehr beträgt.

**6.** Verfahren zum Verlegen von Bodenverlegematerial nach einem der Ansprüche 1 bis 3 auf einem in einem Fahrerhaus eines Fahrzeugs vorgesehenen Bodenblech, wobei der Stromwiderstandswert der Teppichlage des Bodenverlegematerials, das an einer Stelle im Wesentlichen in der Nähe einer in dem Fahrzeug eingerichteten Kraftmaschine verlegt wird, so eingestellt wird, dass er niedriger als der Stromwiderstandswert der Teppichlage des Bodenverlegematerials ist, das an einer von der Kraftmaschine verhältnismäßig weit weg entfernten Stelle verlegt wird.

**7.** Stückmatte, umfassend eine Wirkplüschlage mit Wirkplüschgarn; eine Grundgewebelage, die die Wirkplüschlage trägt; und eine Polstermateriallage, die durch unzusammenhängend angeordnete aus einem Thermoplast hergestellte Verbindungsstreifen auf der Rückseite der Grundgewebelage geschichtet ist, wobei ein Luftstromwiderstandswert von der Oberseite der Wirkplüschlage zur Rückseite der Polstermateriallage zwischen 100 Nsm$^{-3}$ und 1500 Nsm$^{-3}$ eingestellt ist.

**8.** Stückmatte nach Anspruch 7, bei der ein Luftstromwiderstandswert von der Oberseite der Wirkplüschlage zur Rückseite der Grundgewebelage zwischen 80 Nsm$^{-3}$ und 700 Nsm$^{-3}$ eingestellt ist und ein Vorderseite-Rückseite-Stromwiderstandswert der Polstermateriallage zwischen 40 Nsm$^{-3}$ und 1000 Nsm$^{-3}$ eingestellt ist.

**9.** Anordnungsstruktur eines Bodenverlegematerials und einer Stückmatte, wobei die Stückmatte nach Anspruch 7 oder 8 auf dem Bodenverlegematerial nach einem der Ansprüche 1 bis 5 nach Formen des Bodenverlegematerials angeordnet ist.

**EP 1 473 706 B1**

10. Anordnungsstruktur eines Bodenverlegematerials und einer Stückmatte nach Anspruch 9, bei der ein Teil auf der Oberfläche der Teppichlage des Bodenverlegematerials, auf dem die Stückmatte angeordnet ist, tiefer als der übrige Teil gemacht ist.

11. Anordnungsstruktur nach Anspruch 9 oder 10, bei der ein Teil, der aus der Teppichlage des Bodenverlegematerials und der Stückmatte in einem Bereich zusammengesetzt ist, in dem sich das Bodenverlegematerial mit der Stückmatte überlagert, zwischen 1500 g/m$^2$ und 4500 g/m$^2$ eingestellt ist und ein Luftstromwiderstandswert von der Oberseite der Stückmatte zur Rückseite der Teppichlage zwischen 150 Nsm$^{-3}$ und 1800 Nsm$^{-3}$ eingestellt ist.

12. Anordnungsstruktur nach einem der Ansprüche 9 bis 11, bei der mindestens eines von dem Bodenverlegematerial und der Stückmatte mindestens eine von einer wasserabweisenden Lage, die aus einem wasserabweisenden Material hergestellt ist, das Wasser abstößt, und einer wasserabsorbierenden Lage, die aus einem Material hergestellt ist, das Wasser absorbiert, umfasst.

13. Anordnungsstruktur nach einem der Ansprüche 9 bis 12, bei der die Puffermateriallage des Bodenverlegematerials und die Polstermateriallage der Stückmatte mit einer Mehrzahl von Poren gebildet sind, die Luft mindestens in einem Teil davon einschließen.

**Revendications**

1. Matériau de revêtement de sol adapté pour être disposé sur un panneau de plancher, ménagé dans une cabine d'un véhicule, comprenant :

   une couche de tapis moulable ayant un matériau de moulage dispersé à l'intérieur, réalisé en une résine thermoplastique formée dans un état de poudre ou de fibre, la couche de tapis après moulage ayant une valeur de résistance au flux d'air d'avant en arrière ajustée entre 100 Nsm$^{-3}$ et 1 000 Nsm$^{-3}$ et
   une couche de matériau tampon réalisée en un matériau ayant une propriété d'enveloppement d'air, disposé sur la surface arrière de ladite couche de tapis, et
   ayant une valeur de résistance au flux d'air d'avant en arrière ajustée entre 40 Nsm$^{-3}$ et 800 Nsm$^{-3}$.

2. Matériau de revêtement de sol selon la revendication 1, dans lequel ladite valeur de résistance au flux d'air de ladite couche de tapis est ajustée entre 100 Nsm$^{-3}$ et 500 Nsm$^{-3}$.

3. Matériau de revêtement de sol selon la revendication 1 ou 2, dans lequel des bandes de jonction réalisées en une résine thermoplastique sont disposées de manière discontinue sur la surface arrière de ladite couche de tapis, de sorte que ladite couche de tapis et ladite couche de matériau tampon soient disposées à travers lesdites bandes de jonction.

4. Matériau de revêtement de sol selon l'une quelconque des revendications 1 à 3, dans lequel ladite couche de matériau tampon est réalisée, de façon à avoir une épaisseur de 5 mm ou plus, quand il est disposé sur ledit panneau de plancher.

5. Matériau de revêtement de sol selon la revendication 4, dans lequel ladite épaisseur de ladite couche de matériau tampon est de 20 mm ou plus.

6. Procédé consistant à disposer sur un panneau de plancher ménagé à l'intérieur d'une cabine de véhicule un matériau de revêtement de sol, selon l'une quelconque des revendications 1 à 3, dans lequel ladite valeur de résistance au flux de ladite couche de tapis dudit matériau de revêtement de sol, disposé dans une position sensiblement proche d'un moteur principal, équipée dans ledit véhicule, est réglée pour être inférieure à ladite valeur de résistance au flux d'air de ladite couche de tapis dudit matériau de revêtement de sol, disposé dans une position relativement éloignée de ladite machine motrice.

7. Moquette en coupon, comprenant une couche de velours tricoté ayant un fil de velours tricoté ; une couche de vêtement de base portant ladite couche de velours tricoté ; et une couche de matériau amortisseur disposé sur la surface arrière de ladite couche de vêtement de base par des bandes de jonction disposées de manière discontinue d'une résine thermoplastique,
   dans laquelle une valeur de résistance de flux d'air allant de la surface supérieure de ladite couche de velours tricoté

13

à la surface arrière de ladite couche de matériau amortisseur est ajustée entre 100 Nsm$^{-3}$ et 1 500 Nsm$^{-3}$.

8. Moquette en coupon selon la revendication 7, dans laquelle une valeur de résistance au flux d'air provenant de la surface supérieure de ladite couche de velours tricoté vers la surface arrière de ladite couche de vêtement de base est ajustée entre 80 Nsm$^{-3}$ et 700 Nsm$^{-3}$ et une valeur de résistance de flux d'avant en arrière de ladite couche de matériau amortisseur est ajustée entre 40 Nsm$^{-3}$ et 1 000 Nsm$^{-3}$.

9. Structure d'installation d'un matériau de revêtement de sol et d'une moquette en coupon, dans laquelle la moquette selon la revendication 7 ou 8 est disposée sur le matériau de revêtement de sol, selon l'une quelconque des revendications 1 à 5, après moulage dudit matériau de revêtement de sol.

10. Structure d'installation d'un matériau de revêtement de sol et d'une moquette en coupon selon la revendication 9, dans laquelle une partie sur la surface de ladite couche de tapis dudit matériau de revêtement de sol sur laquelle ladite moquette est disposée est inférieure à la partie restante.

11. Structure d'installation selon la revendication 9 ou 10, dans laquelle une partie comprenant ladite couche de tapis dudit matériau de revêtement de sol et ladite moquette en coupon, dans une zone où ledit matériau de revêtement de sol chevauche ledit tapis, est ajustée entre 1 500 g/m$^2$ et 4 500 g/m$^2$, et une valeur de résistance au flux d'air de la surface supérieure de ladite moquette en coupon à la surface arrière de ladite couche de tapis est ajustée entre 150 Nsm$^{-3}$ et 1 800 Nsm$^{-3}$.

12. Structure d'installation selon l'une quelconque des revendications 9 à 11, dans laquelle au moins un matériau de revêtement de sol et ladite moquette en coupon comprennent au moins une couche hydrophobe en matériau hydrophobe qui rejette l'eau, et une couche absorbant l'eau réalisée en un matériau qui absorbe l"eau.

13. Structure d'installation selon l'une quelconque des revendications 9 à 12, dans laquelle ladite couche de matériau tampon dudit matériau de revêtement de sol et ladite couche de matériau amortissant de ladite moquette en coupon sont formées d'une pluralité de pores qui enveloppent l'air, au moins dans une partie de celle-ci.

Fig. 1

Fig. 2a

Noise level at the position of right ear of a driver

Fig. 2b

Noise level at the position of right ear of a passenger on a rear seat

Fig. 3a

160 Hz Noise Level

Fig. 3b

250 Hz Noise Level

Fig. 4a

—o— Carpet Layer A

··◆·· Carpet Layer B

Distance from a position close to a carpet layer (cm)

160 Hz Noise Level

Fig. 4b

—o— Carpet Layer A

··◆·· Carpet Layer B

Distance from a position close to a carpet layer (cm)

250 Hz Noise Level

18

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51112889 A
- JP 56142054 A
- JP 59186750 A
- JP 2000516175 PCT
- CH 9700412 W

- JP 2001047926 A
- WO 0053456 A
- WO 9944817 A
- JP 25557108 B